# EUROPEAN PATENT SPECIFICATION

(11) **EP 4 365 763 B1**
(45) Date of publication and mention of the grant of the patent: **20.08.2025**
(21) Application number: 22205796.0
(22) Date of filing: 07.11.2022
(51) Int. Cl.: G06F 21/64, G06F 9/54

(54) **CERTIFIED COPY PASTE**
ZERTIFIZIERTE KOPIERPASTE
PÂTE À COPIER CERTIFIÉE

(43) Date of publication of application: 08.05.2024
(73) Proprietor: Nokia Technologies Oy, 02610 Espoo (FI)
(72) Inventor: ROBINSON, Julien, Chatenay-Malabry (FR); CALMEL, Jean-Marie, Le Chesnay (FR)
(74) Representative: Nokia EPO representatives

(56) References cited:
- CN-A- 112 287 372
- US-A1- 2009 097 655
- US-A1- 2013 036 306

## Description

### TECHNICAL FIELD

Various example embodiments relate generally to methods and apparatuses for performing copy and / or paste functionality.
US 2009/097655 A1 relates to a storage system management method.

### BACKGROUND

Cyber attacks have factually increased. Attackers exploit the widespread use of the internet: instead of working locally, most professionals rely on Web content, should it be for getting knowledge, downloading software codes of applications or synchronizing documents. In the domain of software development there are added threats, often more critical because the output of the work of a user is an executable code. For example packages may be built using tools that automatically download and/or execute third party packages.

Security policies recommend to not use or execute what is not trusted, whatever the means to obtain it. This implies verifying any package, should it be a document, a software library, or dynamically loaded software code.

However this leaves an open security breach because content (e.g. software code or any other type of content) may be obtained simply by searching content on the web and copy-pasting the found content to reuse it. For example, a programmer might find a useful snippet of code and copy paste it into his code. A user may also copy content from a web site to paste into another web site, without actually visualizing what has been copied to the buffer.

In most of the operating systems available for user equipment, the software applications can customize copy-paste commands and determine whether and when content can be copied to the clipboard and /or extracted from the clipboard to be pasted.

The main vulnerabilities of copy-pasting are:
- Putting more in the clipboard more than what is demanded (e.g. by intercepting the "copy" command)
- inserting hidden characters, homographic characters ("look-alike" characters), or control characters (for example, an invisible character that changes the text flow direction to right-to-left).

So there remains a security issue with the use of the copy-paste functionality.

### SUMMARY

The scope of protection is set out by the independent claims. The embodiments, examples and features, if any, described in this specification that do not fall under the scope of the protection are to be interpreted as examples useful for understanding the various embodiments or examples that fall under the scope of protection.

According to a first aspect, a method comprises: receiving a user request to paste an object from a clipboard to a target application; extracting from the clipboard a signed object data block associated with the object; the signed object data block comprising a payload data block and an object format identifier; the payload data block comprising a representation of the object, the object format identifier being indicative of a format of the representation and of the presence in the signed object data block of a signature; wherein the signature is a signature of the payload data block by a source application having copied the object to the clipboard; performing a verification of the authenticity of the signature and the integrity of the payload data block using the signature; determining whether to paste or not the object to the target application based on the results of the verification, wherein the payload data block comprises a provenance data block including provenance information associated with the object.

The method may comprise: presenting a warning message to a user of the target application when the authenticity of the signature is not verified or when the integrity of the payload data block is not verified.

Determining whether to paste or not the object to the target application may comprise: pasting the object to the target application when the signature is valid and the integrity of the payload data block is verified; inhibiting pasting of the object to the target application when the authenticity of the signature is not verified or when the integrity of the data block is not verified.

Determining whether to paste or not the object to the target application may comprise: asking the user to decide whether to paste or not the object to the target application; pasting the object to the target application when the user decides to paste the object to the target application; inhibiting pasting of the object in the target application when the user decides not to paste the object to the target application.

The method may comprise: providing to the user of the target application the provenance information before or when asking the user whether the user wants or not to paste the object to the target application.

The provenance information may include at least one of an identification of the first application having copied the signed object data block to the clipboard, a timestamp at which the object has been copied to the clipboard by the first application, an identification of a user having generated the object.

The object may have been copied successively from the first application to the clipboard, from the clipboard to a second application and from the second application to the clipboard. In this case, the signed object data block may comprise a second provenance data block including second provenance information associated with the second application. The second provenance information may comprise an identification of a second application from which the object has been copied to the first application. The signed object data block may comprise a second signature of a second payload data block by the second application. The second payload data block may comprise the payload data block, the signature of the payload data block by the first application and the second provenance data block. The method may comprise: performing a second verification of the authenticity of the second signature and of the integrity of the second payload data block using the second signature; wherein determining whether to paste or not the object to the target application is performed based on the results of the second verification.

The method may comprise: receiving a second user request to paste a second object from the clipboard to the target application; extracting from the clipboard an second object data block associated with the second object, the second object data block comprising a second payload data block and a second object format identifier, the second payload data block comprising a representation of the second object, the second object format identifier being indicative of a format of the representation of the second object, the second object format identifier being indicative of the absence of a signature authenticating a source application; performing one of inhibiting pasting of the second object to the target application and pasting the second object to the target application only once the user has authorized the pasting of the object to the target application.

According to a second aspect, a method comprises: receiving a user request to copy an object from a source application to a clipboard; generating a payload data block for the object, the payload data block comprising a representation of the object; generating a signature of the payload data block, wherein the signature authenticates the source application; copying a signed object data block to the clipboard, the signed object data block comprising the payload data block, the signature and an object format identifier, the object format identifier being indicative of a format of the representation the object and of the presence in the signed object data block of a signature. The method further comprises: generating a provenance data block including provenance information associated with the source application, wherein the payload data block comprises the provenance data block. The provenance information may comprise at least one of: an identification of the first application having copied the signed object data block to the clipboard, a timestamp at which the object has been copied to the clipboard by the source application and an identification of a user having generated the object.

According to a third aspect, an apparatus is disclosed.

The apparatus may comprise means for performing a method comprising: receiving a user request to paste an object from a clipboard to a target application; extracting from the clipboard a signed object data block associated with the object, the signed object data block comprising a payload data block and an object format identifier, the payload data block comprising a representation of the object, the object format identifier being indicative of a format of the representation and of the presence in the signed object data block of a signature, wherein the signature is a signature of the payload data block by a source application having copied the object to the clipboard; performing a verification of the authenticity of the signature and the integrity of the payload data block using the signature; determining whether to paste or not the object to the target application based on the results of the verification, wherein the payload data block comprises a provenance data block including provenance information associated with the object.

The apparatus may comprise means for performing a method comprising: receiving a user request to copy an object from a source application to a clipboard; generating a payload data block for the object, the payload data block comprising a representation of the object; generating a signature of the payload data block, wherein the signature authenticates the source application; copying a signed object data block to the clipboard, the signed object data block comprising the payload data block, the signature and an object format identifier, the object format identifier being indicative of a format of the representation the object and of the presence in the signed object data block of a signature; generating a provenance data block including provenance information associated with the source application, wherein the payload data block comprises the provenance data block.

Generally, the apparatus may comprise means for performing one or more or all steps of a method disclosed herein. The method may be a method for copying data to a clipboard (for example a method according to the second aspect) and / or a method for pasting data from a clipboard (for example a method according to the first aspect) as disclosed herein. The means may include circuitry configured to perform one or more or all steps of a method disclosed herein. The means may include at least one processor and at least one memory storing instructions that, when executed by the at least one processor, cause the apparatus to perform one or more or all steps of a method disclosed herein.

One or more embodiments concern a computer program comprising instructions that, when executed by an apparatus, cause the apparatus to perform: a method disclosed herein. The instructions may cause an apparatus to perform one or more or all steps of a method as disclosed herein. The method may be a method for copying data to a clipboard (for example a method according to the second aspect) and / or a method for pasting data from a clipboard (for example a method according to the first aspect) as disclosed herein.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 illustrates aspect of a system for performing copy-paste according to an example.
FIGS. 2A-2C show object data blocks stored in a clipboard according to an example.
FIG. 3 show a diagram illustrating the generation of a signature according to an example.
FIG. 4 is a flowchart illustrating a method for copying at least one object to a clipboard according to an example.
FIG. 5 is a flowchart illustrating a method for pasting at least one object from a clipboard according to an example.
FIG. 6 is a flowchart illustrating a method for copying at least one object to a clipboard according to an example.
FIG. 7 is a flowchart illustrating a method for pasting at least one object from a clipboard according to an example.
FIG. 8 is a block diagram illustrating an exemplary hardware structure of an apparatus according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and / or aspects that are relevant for a clear understanding of the present invention, while eliminating, for purposes of clarity, many other elements that may be well known in the art or not relevant for the understanding of the invention.

One or more example embodiments describe methods and apparatuses for providing a trusted copy-paste functionality.

The content (corresponding one or more objects) copied to the clipboard is stored in a signed object data block. To ensure compatibility with the functioning of clipboards, the signed object data block comprises, beside a payload data block comprising a representation of the object, an object format identifier, the object format identifier being indicative of a format of the representation of the object and at the same time of the presence in the signed object data block of a signature.

The signature is a signature of an object data block by a source application having generated the object data block and copied its content to the clipboard. The signature may be computed based at least on the payload data block to allow an integrity check of the payload data block. The signature may be generated using a cryptographic key associated with the source application, thereby allowing an authentication of the source application based on a verification of the authenticity of the signature.

The target application to which the content is to be pasted, may determine whether to paste or not the object to the target application based on the results of the authentication of the source application and/or the integrity check of the payload data block.

A source application of a content may sign any content that is copied into the clipboard. The clipboard content is trusted as much as the associated certificate of the source application is trusted.

In some cases, the determination to paste or not may be performed based on security settings and / or security policies / rules. For example, the determination may be based on list of prohibited applications and list of trusted applications. If the content come from a source application in the list of prohibited application, the pasting content is always forbidden. If the content come from a source application in the list of authorized applications, the pasting content is always authorized. In the other cases, a default behavior may be configured. For example, the user may be asked to decide whether to paste or not the concerned content.

A signed object data block may be trusted by the user. For example, the determination to paste or not may be based on user decision, such that for example a user may confirm, for each content, whether he want to paste or not the content.

If the clipboard includes an unsigned object data block, the concerned object can still be pasted to the target application, but with full knowledge of the level of trust.

It is up to each target software application to decide what to do with untrusted content from the clipboard. For example, display a warning, asking for confirmation from a user or forbidding the pasting, for example depending on security settings, or depending on whether the target application is running under a corporate or private operating system.

Likewise it is up to each source software application to decide whether to stored signed content or unsigned content in the clipboard. As an example application, a coder assistance web site may decide to sign only snippets that have over 100 upvotes. The web site is trusted by most users. Malicious code may be either signaled or downvoted, or available on an untrusted website, so it will not be trusted by a user and used by a user. But trusted code copied to the clipboard can be pasted with more confidence.

In the proposed solution, the content of the object data blocks does not need to be encrypted. The aim here is not confidentiality but both integrity and the possibility to know and check the provenance of the object to be pasted.

The following example implementation does not modify the management by the operating system of the clipboard, but introduces new object formats for signed content copied to the clipboard.

A clipboard may include one or more objects or items. In this context, an object may be:
- a basic object like an image, a text, an audio content, a graphic, etc; or
- a combined / complex object like a web page, a drawing, a slide, a message, etc;

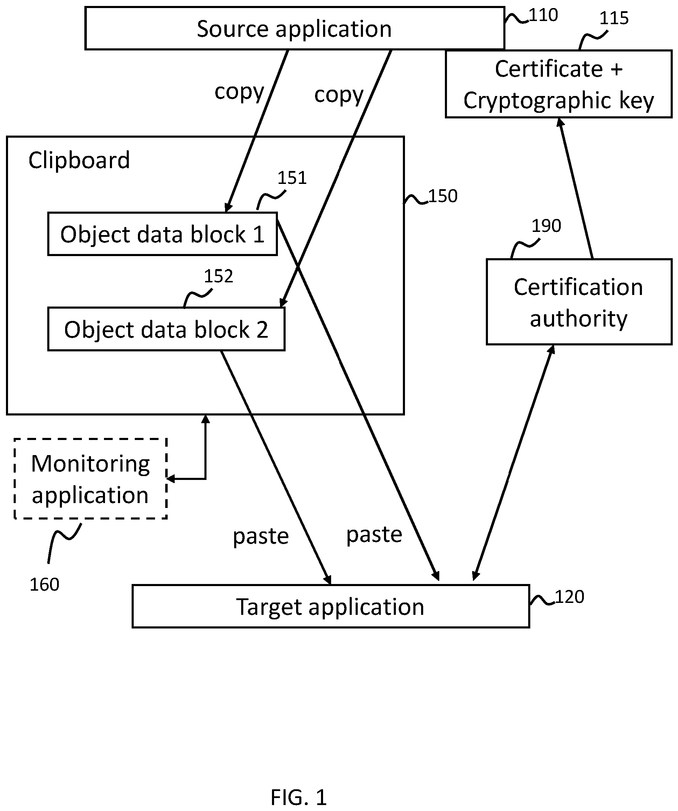

As represented by FIG. 1, each object or group of objects that is copied to the clipboard 150 is stored in the clipboard in an object data block 151, 152.

Each software application 110, 120 that runs on a user equipment may access to the clipboard using dedicated functions to store (e.g. to copy data) one or more object data blocks 151, 152 in the clipboard and / or retrieve (e.g; to paste data) one or more object data blocks 151, 152 from clipboard.

A software application 110 may copy an object or a group of objects from the software application (referred to herein as the source application 110 or the source software application 110) to the clipboard using a first clipboard function. By copying "from the software application", the person skilled in the art understands that the software application has access to at least one memory space during its execution and may perform operation to copy content of this memory space to the clipboard.

As an example, the source application 110 is named "CopyApp". It may be any software application that enables to copy data into the clipboard. Example applications include:
- a browser, that offers commands "Ctrl-C" and "right-click and copy";
- a graphical editor that offers several copy commands like "copy" and "copy as picture". These commands do not put the same content in the clipboard, the default (Ctrl-C) "copy" puts textual description of the picture while the other puts an image (bitmap);
- a shell (or "cmd.exe", or "powershell") that uses the selection or "Enter" as a copy command.

These examples are given to remind that copying content is not a system command available to the user for any software application, but a command that a software application chooses to propose, and that the software application 110 implements in the way it sees best fit. A browser can either put an image in the clipboard, or the URL of that image, or a textual description of that image, or all three. It is then up to the target software application 120 that reads the clipboard to choose what the software application 120 wants to retrieve.

A trusted service of a certification authority (CA) 190 may issue a certificate 115 and / or cryptographic key 115 for a software application. The cryptographic key allows to sign a content to generate a signed content. The certificate allows to authenticate the associated software application and includes a cryptographic key that allows to verify the signature of a signed content.

A software application 120 may paste an object or a group of objects from the clipboard to the software application (referred to herein as the target application 120 or the target software application 120) using a second clipboard function. By pasting "to the software application", the person skilled in the art understands that the software application has access to at least one memory space during its execution and may perform operation to copy content from the clipboard to this memory space.

As an example, the target application 120 is named "PasteApp". It may be any software application that enables to retrieve data from the clipboard. Example applications include:
- a rich text editor such as Word ^{®}, that offers commands "paste" which pastes rich text, and "paste unformatted" which pastes simple (unformatted) text.;
- a basic text editor such as Notepad ^{®} that pastes only text from the clipboard; if there is only an image in the clipboard, nothing is pasted;
- an executable shell;
an image editor that pastes only images from the clipboard; if there is only plain text in the clipboard, nothing is pasted.

These examples show that the target application may choose the format of the object that is retrieved from the clipboard.

A user equipment, UE, (or user terminal, user device) may refer to a computing device that includes communication means operating with or without a subscriber identification module (SIM), including, but not limited to, the following types of devices: a mobile station (MS), a mobile phone, a radio cell phone, a smartphone, a personal digital assistant (PDA), a handset, a device using a wireless modem (alarm or measurement device, etc.), a laptop and/or touch screen computer, a tablet, a phablet, a game console, a notebook, and a multimedia device, as examples.

An example implementation based on the Windows ^{®} clipboard model will now be described.

The clipboard is a service provided by the operating system for which application programming interfaces (APIs) are available to each software application that run under this operating system. The following functions may be available through APIs:
- Put data: this function is called by the source software application that does "copy" in order to copy an object data block from the source software application to the clipboard;
- Get data: this function is called by the target software application that does "paste" in order to copy an object data block from the clipboard to the target software application.

For each object data block copied to the clipboard, an identifier of the object format is stored in association with a representation of the object. Typical object formats that may be available may include: a text, an image (bitmap), an audio content, a graphic, etc.

To be able to manage the presence of signed object data block, new object formats are introduced. Each new object format is a signed object format corresponding to an existing (unsigned) object format: for example, a signed text, a signed image (bitmap), a signed audio content, a signed graphic, etc. For example, a text format may be defined as "Certified Text" for identifying the signed version of the text format, where "Text" is the name identifying the unsigned version of the text format.

In one or more embodiments, a monitoring application 160 may be added to the operating system. The monitoring application 160 is notified whenever the clipboard receives or emits data (for each copy or paste operation). The monitoring application 160 may run as a background task. In an embodiment with strict security rules, the monitoring application 160 may delete any object from the clipboard that is not signed. In an embodiment with less strict security rules, the monitoring application 160 may raise a warning whenever the clipboard contains unsigned object(s). The monitoring application 160 may also verify the integrity of the payload data block and authenticity of the signatures for signed object data block, thereby relieving the target application of this task. In such a case, the monitoring application 160 may delete any object from the clipboard for which the integrity of the payload data block is not verified and / or the authenticity of the signature is not verified.

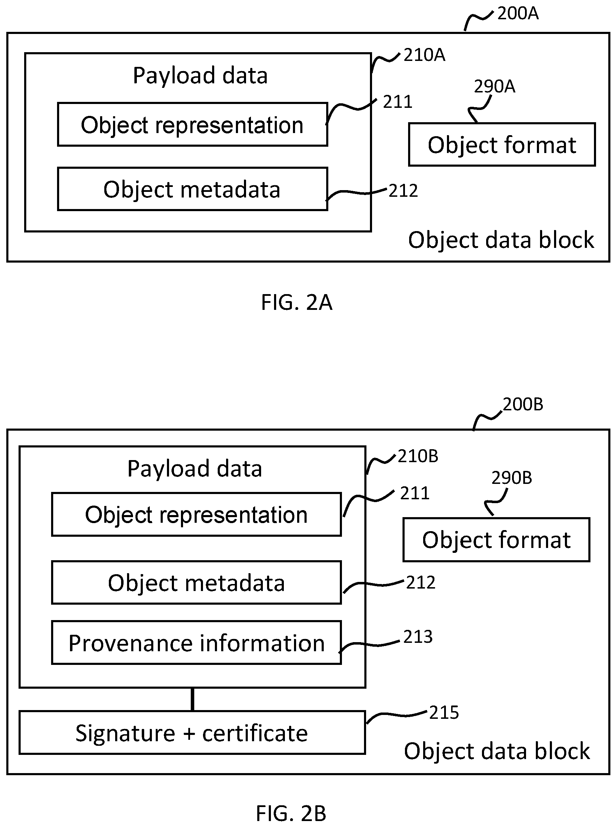

FIGS. 2A to 2C shows possible data formats for object data blocks in a clipboard.

FIG. 2A shows an unsigned object data block 200A. The unsigned object data block 200A is used to store at least one object O1 in a clipboard. The unsigned object data block 200A comprises a payload data block 210A and an object format identifier 290A. The payload data block 210A comprises a representation 211 of the object O1. The object format identifier 290A is indicative of a format of the representation of the object O1. The object format identifier 290A may be indicative of the absence of a signature authenticating a source application or, equivalently, is not indicative of the presence of a signature authenticating a source application.

For example, if the object O1 is an image and the object format identifier is indicative of a bitmap format, the representation of the object O1 includes an image in bitmap format. For example, if the object O1 is an image and the object format identifier is indicative of a text format, the representation of the object O1 includes a description of the image in text format. For example, if the object O1 is a text and the object format identifier is indicative of a text format, the representation of the object O1 includes bytes encoding the text in text format.

It is to be noted that for a same object to be copied to the clipboard, several clipboard entries (several object data blocks or several representations in a same object data block) may be created to the clipboard if different formats are available for this object. For example, if the object is an image, two object data blocks may be copied to the clipboard: one for the text format associated with a description of the image and another one for the bitmap format associated with the pixels of the image.

The payload data block 210A may comprise metadata 212 associated with the representation 211 of the object O1. For example, metadata of an image may include a description of the image
FIG. 2B shows a signed object data block 200B. The signed object data block 200B is used to store at least one object O1 in a clipboard. The signed object data block 200B comprises a payload data block 210B and an object format identifier 290B.

Like for FIG. 2A, the payload data block 210A comprises a representation 211 of the object O1 and the object format identifier is indicative of a format of the representation 211.

Like for FIG. 2A, the payload data block 210A may comprise metadata 212 associated with the representation 211 of the object O1.

In FIG. 2B, the payload data block may include a provenance data block including additional metadata inserted by a source application when or before copying the concerned object to the clipboard. These additional metadata include provenance information 213. The provenance information 213 may include various information related to the provenance (origin) and / or lifecycle of the object O1. The provenance information 213 may include context information with respect to the copy operation performed by the source application. The provenance information 213 may include at least one of:
- an identification of the source application having copied the signed object data block to the clipboard;
- a timestamp at which the object has been copied to the clipboard by the source application;
- an identification of a user having generated the object O1.

Examples of provenance information 213 may include:
- This text comes from web site W1;
- This paragraph was contributed to this wiki by user U at date D;
- This piece of code was contributed through web site W2 by user U1 and copied previously from project P of web site W3;
- This image was created on this computer by user U2 with software S;

In use cases in which content is copied from a web site, the provenance information may include: the author of the content, the web site domain, and optionally the browser with its add-ons list (add-ons may add vulnerabilities to a browser and this information may be used by a user and / or the target application to determine whether or not to paste an object)

The provenance information 213 of an object O1 may be generated incrementally by each software application that copies the object O1 by adding new provenance information in a list of provenance information items at each copy. The repeated copy-paste operations may add new provenance information to existing provenance information, for example as a chain of provenance information. It is to be noted that the repeated copy-paste operations may be performed by several software applications running on distinct devices, therefore through distinct clipboards and that these distinct clipboards may be managed by distinct operating systems or by a same operating system.

The provenance information may be stored independently of the metadata associated with the representation or be stored with these metadata such that the provenance information is kept as the copying / pasting operations are performed on the object, whether or not the source application or the target application is configured to manage the provenance information.

The provenance information 213 of an object O1 can be reduced to delete part of the items in the list of provenance information items or even reset the list by deleting all items of the list. For example, when a text in a document is selected and validated by a user, the provenance information may be reset. For example, for a web2.0 website, the provenance information may be reset for all posts sufficiently upvoted and / or validated by moderators. For example, in a build chain to generate executable software code, the provenance information may be reset for all the used software code because the build and test steps have successfully passed.

In FIG. 2B, the object format identifier is indicative of the presence in the signed object data block of a signature 215. The signature 215 is a signature of a payload data block 210B by a source application. This source application may be the source application having copied the signed object data block 200B o the clipboard. The signature 215 may be stored as part of the payload data block 210B or may not be part of the payload data block 210B stored in the clipboard.

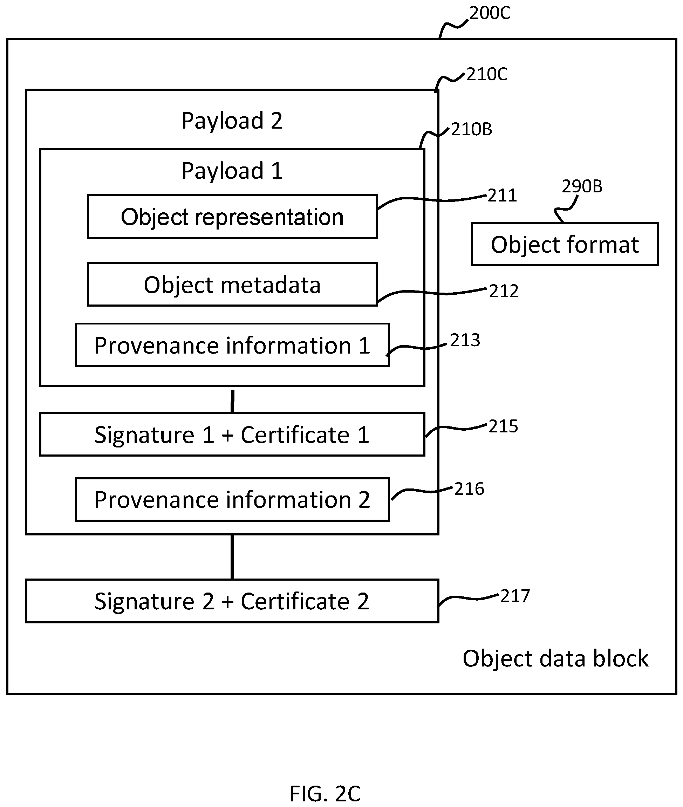

FIG. 2C shows a signed object data block 200C that may be used for storing in a clipboard an object O1 that has been copied successively from a first software application to the clipboard, from the clipboard to a second software application and from the second software application to the clipboard. This figure illustrates the fact that each software application that copies an object to the clipboard may add provenance information to a payload data block and / or its signature computed based on the corresponding payload data block.

The signed object data block 200C is used to store at least one object O1 in a clipboard. The signed object data block 200C comprises a payload data block 210C and an object format identifier 290B.

In FIG. 2C, the payload data block 210C includes a payload data block 210B and signature 215 described by reference to FIG. 2B. Like for FIG. 2B, the payload data block 210B comprises a representation 211 of the object O1 and the object format identifier 290B is indicative of a format of the representation 211. Like for FIG. 2B, the payload data block 210A may comprise metadata 212 associated with the representation 211 of the object O1. Like for FIG. 2B, the payload data block 210B may include provenance information 213 associated with the first software application. Like for FIG. 2B, the signed object data block may include a signature 215 of the first software application (the first source application is the first one in a chain of source applications).

In FIG. 2C, the payload data block 210C includes a second provenance data block including second provenance information 216 that is associated with the second software application. For example, the second provenance information 216 may include an identification of the second software application.

In FIG. 2C, the signed object data block 200C comprises a second signature 217 of the second software application. The second signature may be computed based on the second payload data block 210C including the payload data block 210B, the signature 215 of the first software application and the second provenance data block 216. The signature 217 may be stored as part of the payload data block 210C or not be part of the payload data block 210C.

In an example implementation, the data format for storing an object data block may be JWT (JSON Web Token). A JWT data block contains 3 fields, one field for the encryption algorithm (here the signing algorithm), one field for the contents (here the payload data block), and one field for the signature. The fields are base64-encoded and separated by periods. For use in a clipboard, a personalized object format may be used, designated by a new object format identifier "JWT". The new object format identifier "JWT" needs to be known by the target applications, for pasting purposes. Any other character string or tuple of character strings could be used to designate that format and the items stored in the object data block e.g. ("jwt_format", "signed_entry", "jwt-entry").

The signatures used for the object data block may be signatures generated based on asymmetric cryptography. A digital signature scheme typically consists of three algorithms:
- A key generation algorithm that selects a private key uniformly at random from a set of possible private keys. The algorithm outputs the private key and a corresponding public key associated with the signing entity;
- A signing algorithm that, given a digital content and a private key, produces a signature;
- A signature verifying algorithm that, given the digital content, the public key and signature, either confirms or rejects the authenticity of the signature.

Any signing algorithm may be used, for example the RSA developed by the Massachusetts Institute of Technology, the Digital Signature Algorithm (DSA), developed by the National Institute of Standards and Technology, etc.

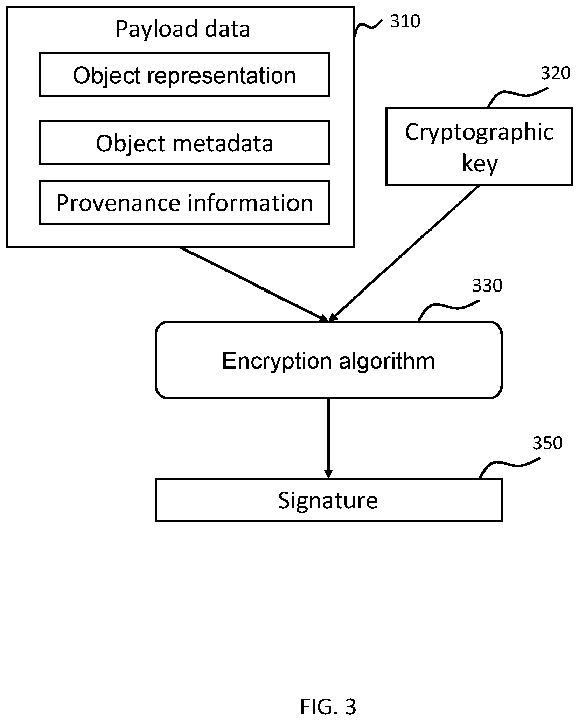

As illustrated by FIG. 3, a signing algorithm may take as input a content (here a payload data block) and a cryptographic key (e.g. a private key) associated with the signing entity (here a source application) and generate as output the signature. The signature may be generated based on a hash of the content to be signed. The signature may be stored in the object data block together with a certificate associated with the signing entity. The certificate allows to check the authenticity of the signature and to authenticate the signing entity. The certificate may include a cryptographic key (e.g. a public key corresponding to the private key) that allows to retrieve the hash of the content to be signed from the signature. This hash can then be compared to a hash of the received payload data block to verify whether they match.

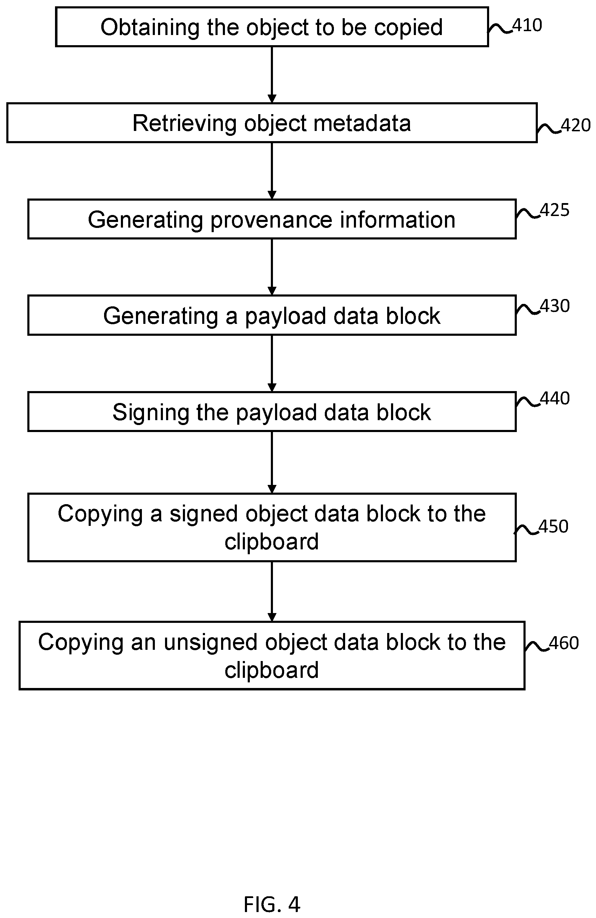

FIG. 4 shows a flowchart of a method for copying content to a clipboard according to one or more example embodiments. The steps of the method may be implemented by a source software application, named "CopyApp", running on a user equipment.

While the steps are described in a sequential manner, the man skilled in the art will appreciate that some steps may be omitted, combined, performed in different order and / or in parallel.

Step 410: CopyApp gets the content (e.g. one or more objects) to copy to the clipboard and a representation of this content.

Step 420: CopyApp may retrieve any metadata associated with the representation of the content.

Step 425: CopyApp may generate provenance information for the content.

Step 430: CopyApp generates a payload data block including the representation of the content. The CopyApp may include in the payload data block the retrieved metadata and / or the provenance information.

Step 440: CopyApp signs the payload data block, using either a trusted service of a certification authority (CA), or a certificate and / or cryptographic key issued by a trusted CA. A signature of the payload data block is obtained that allows to authenticate the source application and at the same time to check the integrity of the payload data block. The certificate allows to verify the authenticity of the signature.

Step 450: CopyApp generates a signed object data block by serializing the payload data block and the signature. CopyApp copies the signed object data block to the clipboard. The signed object data block is stored in the clipboard in association with an object format identifier that is indicative of a format of the representation. The object format identifier also indicates that the object data block is a signed object data block, i.e. the object format identifier indicates the presence of a signature in the object data block.

Step 460: CopyApp may also generate, for the same object, an unsigned object data block including the payload data block but no signature. The unsigned object data block may also be copied to the clipboard such that the object is available in a signed version and an unsigned version, both the signed and unsigned object data blocks including a same object representation. It will be up to the software application that reads the clipboard to choose which object data block to retrieve from the clipboard.

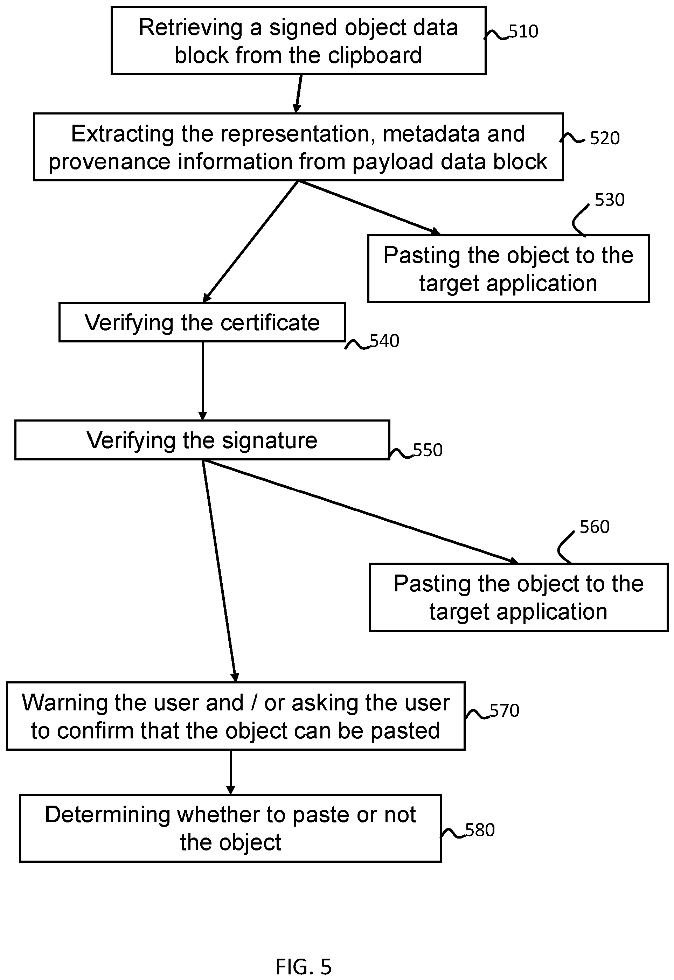

FIG. 5 shows a flowchart of a method for retrieving content from a clipboard according to one or more example embodiments. The steps of the method may be implemented by a target software application running on a user equipment.

While the steps are described in a sequential manner, the man skilled in the art will appreciate that some steps may be omitted, combined, performed in different order and / or in parallel.

Step 510: PasteApp retrieves a signed object data block from the clipboard. PasteApp gets the object format identifier associated with the signed object data block and determines whether the object format identifier indicates the presence of a signature in the object data block. When the object format identifier indicates the presence of a signature in the object data block, steps 520 to 570 are executed after step 510. In absence of a signature, step 580 is executed after step 510.

Step 520: PasteApp deserializes the signed object data block to extract the representation of the object, the metadata if any, the provenance information if any and the signature.

Step 530: If PasteApp is not a critical application, PasteApp may simply ignore the signature and use the representation of the object to paste the object to PasteApp.

Step 540: PasteApp verifies a certificate associated with the entity that has created the signature. This may be performed for example by checking the certificate chain against a known and trusted certificate authority (typically a root CA).

Step 550: PasteApp verifies the signature contained in the signed object data block. For example, if the hash extracted from the signature corresponds to the hash of the payload data block, the integrity of the payload data block is verified and the signature is considered valid.

Step 560: if the signature has been successfully verified in steps 540 and 550, PasteApp pastes the object.

Step 570: If the signature verification has failed, PasteApp may warn the user (e.g. by displaying a message like "the application you copied from is not trustworthy, please refrain from pasting from its contents"), and / or ask for confirmation by the user.

Likewise, if there is no signed format available, PasteApp may either warn the user or give the user a choice ("there is no signed clipboard content, do you want to paste unsigned contents?").

Step 580: PasteApp determines whether to paste or not the object based on the response of the user in step 570 and / or the criticality of the target application. For example, it may be less critical for a text editor than a code editor, and very critical for an executable shell.

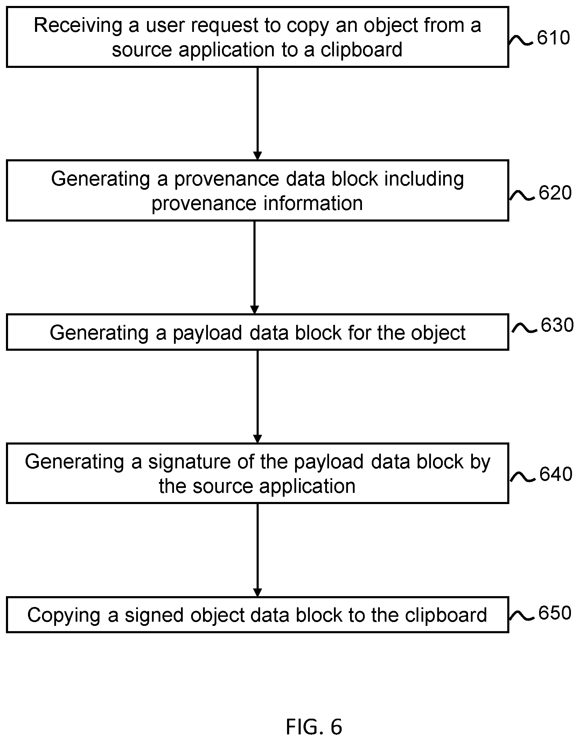

FIG. 6 shows a flowchart of a method for copying data to a clipboard according to one or more example embodiments. The steps of the method may be implemented by a source software application running on a user equipment according to any example described herein.

While the steps are described in a sequential manner, the man skilled in the art will appreciate that some steps may be omitted, combined, performed in different order and / or in parallel.

In step 610, a user request to copy an object from a source application to a clipboard is received.

In step 620, a provenance data block including provenance information associated with the source application may be generated. The provenance information may include at least one of: an identification of the first application having copied the signed object data block to the clipboard, an identification of a user having generated the object and an identification of another application from which the object has been copied to the clipboard.

In step 630, a payload data block is generated for the object. The payload data block comprises a representation of the object. The payload data block comprises the provenance data block.

In step 640, a signature of the payload data block by the source application is generated. The signature authenticates the source application.

In step 650, a signed object data block is copied to the clipboard. The signed object data block comprises the payload data block, the signature and an object format identifier. The object format identifier is indicative of a format of the representation the object. The object format identifier is indicative of the presence in the signed object data block of a signature.

Other aspects, properties and features (for example those of an object data block) that are disclosed herein, for example by reference to FIGS. 2B and 2C, may be applicable to the method described by reference to FIG. 6.

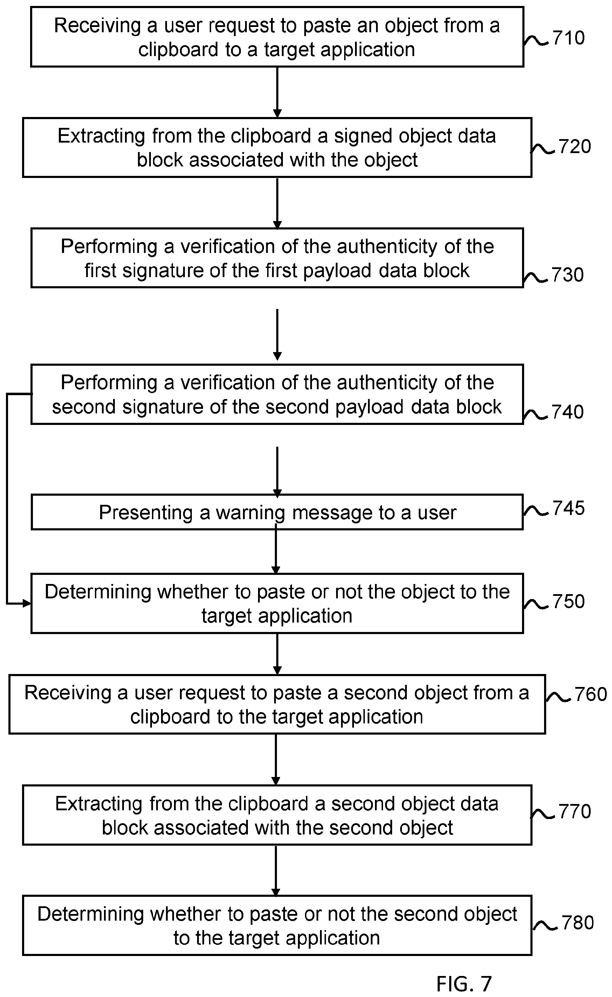

FIG. 7 shows a flowchart of a method for pasting data from a clipboard according to one or more example embodiments. The steps of the method may be implemented by a source software application running on a user equipment according to any example described herein.

While the steps are described in a sequential manner, the man skilled in the art will appreciate that some steps may be omitted, combined, performed in different order and / or in parallel.

In step 710, a user request to paste an object from a clipboard to a target application is received by a source application.

In step 720, a signed object data block associated with the object is extracted from the clipboard. The signed object data block comprises a first payload data block and an object format identifier. The first payload data block comprises a representation of the object. The object format identifier is indicative of a format of the representation (text, bitmap, etc).

The first payload data block comprises a provenance data block including first provenance information associated with the object. The provenance information includes at least one of: an identification of the first application having copied the signed object data block to the clipboard, a timestamp at which the object has been copied to the clipboard by the first application, an identification of a user having generated the object.

The object format identifier is also indicative of the presence of a signature, hereafter the first signature. The signature is a signature of a first application (e.g. the source application having copied the object to the clipboard) computed based at least on the first payload data block. More precisely, the first signature is a signature of the first payload data block by a signing entity that is the source application.

When the object has been copied successively from the first application to the clipboard, from the clipboard to a second application and from the second application to the clipboard, the signed object data block may comprise a second provenance data block including second provenance information associated with the second application, the second provenance information including an identification of a second. The signed object data block may comprise a second signature of a second payload data block by the second application, where the second payload data block includes the payload data block, the signature of the payload data block by the first application and the second provenance data block.

In step 730, a verification of the authenticity of the first signature and/or the integrity of the first payload data block is performed.

When the object has been copied successively from a first application to the clipboard, from the clipboard to a second application and from the second application to the clipboard, the following additional step 740 may be performed.

In step 740, a second verification is performed using the second signature by verifying the authenticity of the second signature and/or the integrity of the second payload data block.

In step 745, a warning message may be presented to a user of the target application when the authenticity of the first signature (or if applicable the second signature) is not verified or when the integrity of the first payload data block (or if applicable the second payload data block) is not verified.

In step 750, it is determined whether to paste or not the object to the target application based on the results of the verification performed at step 730 and / or the second verification performed at step 740 and / or a decision of the user following the warning message.

In at least one embodiment, determining whether to paste or not the object to the target application may comprise: pasting the object to the target application when the first signature (and if applicable the second signature) is valid and the integrity of the first payload data block (and if applicable the second payload data block) is verified; and inhibiting pasting of the object to the target application when the first signature (or if applicable the second signature) is not valid and / or when the integrity of the first payload data block (or if applicable the second payload data block) is not verified.

In at least one embodiment, determining whether to paste or not the object to the target application may comprise: asking the user to decide whether to paste or not the object to the target application; pasting the object to the target application when the user decides to paste the object to the target application; and inhibiting pasting of the object in the target application when the user decides not to paste the object to the target application.

The provenance information (and if applicable the second provenance information) may be provided to the user of the target application before or when asking the user whether the user wants or not to paste the object to the target application.

The following steps may be performed.

In step 760, a second user request to paste a second object from the clipboard to the target application is received.

In step 770, a second object data block associated with the second object is extracted from the clipboard. The second object data block comprises a second payload data block and a second object format identifier. The second payload data block comprises a representation of the second object. The second object format identifier is indicative of a format of the representation of the second object. The second object format identifier being indicative of the absence of a signature authenticating a source application, meaning that the second object data block is an unsigned object data block.

In step 780, based on a determination that the second object data block is an unsigned object data block, it is determined whether to paste or not the second object to the target application. The pasting of the second object to the target application may be inhibited. Alternatively the pasting of the second object to the target application may be performed only if the user authorizes the pasting of the object to the target application.

Other aspects, properties and features (for example those of an object data block) that are disclosed herein, for example by reference to FIGS. 2B and 2C, may be applicable to the method described by reference to FIG. 7.

An example use case is disclosed for a source application named CopyApp that is a text editor and a target application named PasteApp that is a text editor.

CopyApp possesses a certificate certified by certification authority and a cryptographic key (e.g. private key). This enables CopyApp to sign content in a trusted way using a private key.

When Alice selects "x=1" in a text being edited and presses the keys "Ctrl-C", CopyApp creates a new entry for the clipboard, of type JWT, signed with its private key. The CopyApp may add 2 entries (i.e. two object data blocks) for the selected object into the clipboard:
- A first unsigned entry with the copied text "x=1" and the object format "Text".
- A second signed entry with the copied text "x=1", a signature and the object format "JWT".

CopyApp generates a new clipboard entry to store an object data block and includes in the payload data block its own provenance information. The provenance information may be stored as metadata linked to that particular code snippet.

When Alice presses the keys "Ctrl-V" in PasteApp, PasteApp accepts only signed content. PasteApp retrieves the object data blocks from the clipboard and browses through its entries.

Note: If there is no entry with "JWT" format, but only an entry with "Text" format, then PasteApp could display a warning: "cannot paste text 'x=1' because trusted source cannot be established". This would happen if Alice had copied the code from some other source application than the trusted CopyApp.

PasteApp gets the entry with "JWT" format. PasteApp verifies the certificate against a list of approved certificates and then checks the integrity of the object data block by verifying the signature.

PasteApp gets the content of the object data block with "JWT" format.

In this scenario, PasteApp is a fully equipped editor for traceable content.

PasteApp pastes to the currently edited document the snippet "x=1". PasteApp may also paste the metadata stored in the object data block with "JWT" format. For example, the metadata may include information on the source application (a name of identification), the author of the snippet, a source URL, a date, etc:
"source": "CopyApp",
"author": "Alice",
"SourceURL":"https://my.sharepoint.com/alice/Documents/code/stuff.cod",
"date": "2022-09-20T09:11:17Z"

In PasteApp, there is now a file containing code, with metadata for some parts of the code.

Further, if Alice presses again the keys "Ctrl-C" for the pasted snippet "x=1", PasteApp generates a new clipboard entry and may include in the payload data block its own provenance information. PasteApp may keep in the payload data block the previous provenance information associated with CopyApp.

Depending on the data structure used to store an object data block, only one level of provenance information may be stored. Otherwise, each source application may insert in the provenance data block its own provenance information such that a chain of provenance information items is created, each item corresponding to provenance information associated with a source application.

PasteApp may also possess a certificate certified by certification authority and an associated cryptographic key (e.g. a private key). This enables PasteApp to sign content in a trusted way using the private key. Here PasteApp signs the payload data block with its private key.

Further, if Alice edits the text "x=1" and changes it to "x=2", PasteApp removes all metadata from that particular snippet of code. When the modified text "x=2" is copied, the provenance information may start with the provenance information associated with Alice and PasteApp, and will not anymore include the provenance information associated with Alice and CopyApp.

It should be appreciated by those skilled in the art that any functions, engines, block diagrams, flow diagrams, state transition diagrams, flowchart and / or data structures described herein represent conceptual views of illustrative circuitry embodying the principles of the invention. Similarly, it will be appreciated that any flow charts, flow diagrams, state transition diagrams, pseudo code, and the like represent various processes.

Although a flow chart may describe operations as a sequential process, many of the operations may be performed in parallel, concurrently or simultaneously. Also some operations may be omitted, combined or performed in different order. A process may be terminated when its operations are completed but may also have additional steps not disclosed in the figure or description. A process may correspond to a method, function, procedure, subroutine, subprogram, etc. When a process corresponds to a function, its termination may correspond to a return of the function to the calling function or the main function.

Each described function, engine, block, step described herein can be implemented in hardware, software, firmware, middleware, microcode, or any suitable combination thereof.

When implemented in software, firmware, middleware or microcode, instructions to perform the necessary tasks may be stored in a computer readable medium that may be or not included in a host apparatus. The instructions may be transmitted over the computer-readable medium and be loaded onto the host apparatus. The instructions are configured to cause the host apparatus to perform one or more functions disclosed herein. For example, as mentioned above, according to one or more examples, at least one memory may include or store instructions, the at least one memory and the instructions may be configured to, with at least one processor, cause the host apparatus to perform the one or more functions. Additionally, the processor, memory and instructions, serve as means for providing or causing performance by the host apparatus of one or more functions disclosed herein.

The host apparatus may be a general-purpose computer and / or computing system, a special purpose computer and / or computing system, a programmable processing apparatus and / or system, a machine, etc. The host apparatus may be or include or be part of: a user equipment, client device, mobile phone, laptop, computer, network element, data server, network resource controller, network apparatus, router, gateway, network node, computer, cloud-based server, web server, application server, proxy server, etc.

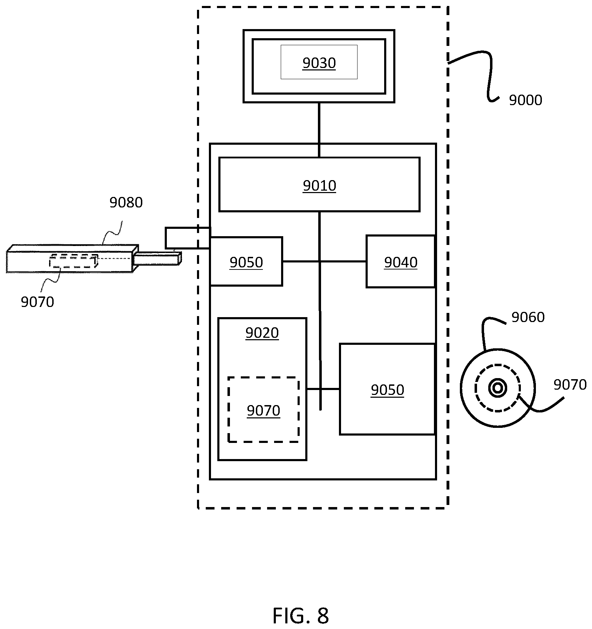

FIG. 8 illustrates an example embodiment of an apparatus 9000. The apparatus 9000 may be a user equipment or be part of a user equipment as disclosed herein and be used to execute one of the methods disclosed herein.

The apparatus 9000 may include at least one processor 9010 and at least one memory 9020. The apparatus 9000 may include one or more communication interfaces 9040 (e.g. network interfaces for access to a wired / wireless network, including Ethernet interface, WIFI interface, etc) connected to the processor and configured to communicate via wired / non wired communication link(s). The apparatus 9000 may include user interfaces 9030 (e.g. keyboard, mouse, display screen, etc) connected with the processor. The apparatus 9000 may further include one or more media drives 9050 for reading a computer-readable storage medium (e.g. digital storage disc 9060 (CD-ROM, DVD, Blue Ray, etc), USB key 9080, etc). The processor 9010 is connected to each of the other components 9020, 9030, 9040, 9050 in order to control operation thereof.

The memory 9020 may include a random access memory (RAM), cache memory, non-volatile memory, backup memory (e.g., programmable or flash memories), read-only memory (ROM), a hard disk drive (HDD), a solid state drive (SSD) or any combination thereof. The ROM of the memory 9020 may be configured to store, amongst other things, an operating system of the apparatus 9000 and / or one or more computer program code of one or more software applications. The RAM of the memory 9020 may be used by the processor 9010 for the temporary storage of data.

The processor 9010 may be configured to store, read, load, execute and/or otherwise process instructions 9070 stored in a computer-readable storage medium 9060, 9080 and / or in the memory 9020 such that, when the instructions are executed by the processor, causes the apparatus 9000 to perform one or more or all steps of a method described herein for the concerned apparatus 9000.

The instructions may correspond to program instructions or computer program code. The instructions may include one or more code segments. A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters or memory contents. Information, arguments, parameters, data, etc. may be passed, forwarded, or transmitted via any suitable technique including memory sharing, message passing, token passing, network transmission, etc.

When provided by a processor, the functions may be provided by a single dedicated processor, by a single shared processor, or by a plurality of individual processors, some of which may be shared. The term "processor" should not be construed to refer exclusively to hardware capable of executing software and may implicitly include one or more processing circuits, whether programmable or not. A processor or likewise a processing circuit may correspond to a digital signal processor (DSP), a network processor, an application specific integrated circuit (ASIC), a field programmable gate array (FPGA), a System-on-Chips (SoC), a Central Processing Unit (CPU), an arithmetic logic unit (ALU), a programmable logic unit (PLU), a processing core, a programmable logic, a microprocessor, a controller, a microcontroller, a microcomputer, a quantum processor, any device capable of responding to and/or executing instructions in a defined manner and/or according to a defined logic. Other hardware, conventional or custom, may also be included. A processor or processing circuit may be configured to execute instructions adapted for causing the host apparatus to perform one or more functions disclosed herein for the host apparatus.

A computer readable medium or computer readable storage medium may be any tangible storage medium suitable for storing instructions readable by a computer or a processor. A computer readable medium may be more generally any storage medium capable of storing and/or containing and/or carrying instructions and/or data. The computer readable medium may be a non-transitory computer readable medium. The term "non-transitory", as used herein, is a limitation of the medium itself (i.e., tangible, not a signal) as opposed to a limitation on data storage persistency (e.g., RAM vs. ROM).

A computer-readable medium may be a portable or fixed storage medium. A computer readable medium may include one or more storage device like a permanent mass storage device, magnetic storage medium, optical storage medium, digital storage disc (CD-ROM, DVD, Blue Ray, etc), USB key or dongle or peripheral, a memory suitable for storing instructions readable by a computer or a processor.

A memory suitable for storing instructions readable by a computer or a processor may be for example: read only memory (ROM), a permanent mass storage device such as a disk drive, a hard disk drive (HDD), a solid state drive (SSD), a memory card, a core memory, a flash memory, or any combination thereof.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc. The means may include at least one processor and at least one memory including computer program code, wherein the at least one memory and the computer program code are configured to, with the at least one processor, cause an apparatus or system to perform the concerned function(s).

As used in this application, the term "circuitry" may refer to one or more or all of the following:
(a) hardware-only circuit implementations (such as implementations in only analog and/or digital circuitry) and
(b) combinations of hardware circuits and software, such as (as applicable) : (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application specific integrated circuit (ASIC), field programmable gate array (FPGA), etc. The circuitry may be or include, for example, hardware, programmable logic, a programmable processor that executes software or firmware, and/or any combination thereof (e.g. a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems and methods without departing from the scope of what is disclosed. Such embodiments should be understood to fall within the scope of the present disclosure as determined based upon the claims.

## Claims

1. A method comprising:
receiving a user request to paste an object from a clipboard to a target application;
extracting from the clipboard a signed object data block associated with the object, the signed object data block comprising a payload data block and an object format identifier, the payload data block comprising a representation of the object, the object format identifier being indicative of a format of the representation and of the presence of a signature in the signed object data block, wherein the signature is a signature of the payload data block by a source application having copied the object to the clipboard;
performing a verification of the signature;
determining whether to paste or not the object to the target application based on the results of the verification;
wherein the payload data block comprises a provenance data block including provenance information associated with the object.

2. The method of claim 1 comprising:
presenting a warning message on the user interface of an apparatus containing the clipboard when the signature is not successfully verified.

3. The method of claim 1 or 2, wherein determining whether to paste or not the object to the target application comprises:
pasting the object to the target application when the signature is successfully verified;
inhibiting pasting of the object to the target application when the signature is not successfully verified.

4. The method of claim 1 or 2, wherein determining whether to paste or not the object to the target application comprises:
asking the user to decide whether to paste or not the object to the target application;
pasting the object to the target application when the user decides to paste the object to the target application.
inhibiting pasting of the object in the target application when the user decides not to paste the object to the target application.

5. The method according to claim 4, comprising:
providing to the user of the target application the provenance information before or when asking the user whether the user wants or not to paste the object to the target application.

6. The method of claim 1 or 5, wherein the provenance information includes at least one of an identification of the first application having copied the signed object data block to the clipboard, a timestamp at which the object has been copied to the clipboard by the first application, an identification of a user having generated the object.

7. The method according to any of claims 1 to 6, wherein the object has been copied successively from the first application to the clipboard, from the clipboard to a second application and from the second application to the clipboard,
wherein the signed object data block comprises a second provenance data block including second provenance information associated with the second application, the second provenance information including an identification of a second application;
wherein the signed object data block comprises a second signature of a second payload data block by the second application, wherein the second payload data block includes the payload data block, the signature of the payload data block by the first application and the second provenance data block;
wherein the method comprises: performing a second verification of the authenticity of the second signature and of the integrity of the second payload data block using the second signature;
wherein determining whether to paste or not the object to the target application is performed based on the results of the second verification.

8. The method according to any of claims 1 to 7, comprising
receiving a second user request to paste a second object from the clipboard to the target application;
extracting from the clipboard an second object data block associated with the second object, the second object data block comprising a second payload data block and a second object format identifier, the second payload data block comprising a representation of the second object, the second object format identifier being indicative of a format of the representation of the second object, the second object format identifier being indicative of the absence of a signature authenticating a source application;
performing one of inhibiting pasting of the second object to the target application and pasting the second object to the target application only once the user has authorized the pasting of the object to the target application.

9. A method comprising:
receiving a user request to copy an object from a source application to a clipboard;
generating a payload data block for the object, the payload data block comprising a representation of the object;
generating a signature of the payload data block, wherein the signature authenticates the source application;
copying a signed object data block to the clipboard, the signed object data block comprising the payload data block, the signature and an object format identifier, the object format identifier being indicative of a format of the representation the object and of the presence in the signed object data block of a signature;
generating a provenance data block including provenance information associated with the source application, wherein the payload data block comprises the provenance data block

10. The method of claim 9, wherein the provenance information includes at least one of: an identification of the first application having copied the signed object data block to the clipboard, a timestamp at which the object has been copied to the clipboard by the source application and an identification of a user having generated the object.

11. An apparatus comprising means for performing a method comprising:
receiving a user request to paste an object from a clipboard to a target application;
extracting from the clipboard a signed object data block associated with the object, the signed object data block comprising a payload data block and an object format identifier, the payload data block comprising a representation of the object, the object format identifier being indicative of a format of the representation and of the presence of a signature in the signed object data block, wherein the signature is a signature of the payload data block by a source application having copied the object to the clipboard
performing a verification of the signature;
determining whether to paste or not the object to the target application based on the results of the verification,
wherein the payload data block comprises a provenance data block including provenance information associated with the object.

12. An apparatus comprising means for performing a method comprising:
receiving a user request to copy an object from a source application to a clipboard;
generating a payload data block for the object, the payload data block comprising a representation of the object;
generating a signature of the payload data block, wherein the signature authenticates the source application;
copying a signed object data block to the clipboard, the signed object data block comprising the payload data block, the signature and an object format identifier, the object format identifier being indicative of a format of the representation the object and of the presence of a signature in the signed object data block;
generating a provenance data block including provenance information associated with the source application, wherein the payload data block comprises the provenance data block.

13. The apparatus according to claim 11 or 12, wherein the means comprise
- at least one processor;
- at least one memory storing instructions that, when executed by the at least one processor, cause the apparatus to perform the method.

## Patentansprüche

1. Verfahren, das Folgendes umfasst:
Empfangen einer Benutzeranforderung zum Einfügen eines Objekts aus einer Zwischenablage in eine Zielanwendung;
Extrahieren eines signierten Objektdatenblocks, der mit dem Objekt verknüpft ist, aus der Zwischenablage, wobei der signierte Objektdatenblock einen Nutzdatenblock und eine Objektformatkennung umfasst, wobei der Nutzdatenblock eine Repräsentation des Objekts umfasst, wobei die Objektformatkennung ein Format der Repräsentation und das Vorhandensein einer Signatur im signierten Objektdatenblock anzeigt, wobei die Signatur eine Signatur des Nutzdatenblocks durch eine Quellanwendung ist, die das Objekt zur Zwischenablage kopiert hat;
Durchführen einer Verifizierung der Signatur;
Bestimmen auf Basis der Ergebnisse der Verifizierung, ob das Objekt in die Zielanwendung eingefügt werden soll oder nicht;
wobei der Nutzdatenblock einen Herkunftsdatenblock umfasst, der Herkunftsinformationen beinhaltet, die mit dem Objekt verknüpft sind.

2. Verfahren nach Anspruch 1, das Folgendes umfasst:
Präsentieren einer Warnnachricht auf der Benutzerschnittstelle einer Einrichtung, die die Zwischenablage enthält, wenn die Signatur nicht erfolgreich verifiziert wird.

3. Verfahren nach Anspruch 1 oder 2, wobei das Bestimmen, ob das Objekt in die Zielanwendung eingefügt werden soll oder nicht, Folgendes umfasst:
Einfügen des Objekts in die Zielanwendung, wenn die Signatur erfolgreich verifiziert wird;
Unterbinden des Einfügens des Objekts in die Zielanwendung, wenn die Signatur nicht erfolgreich verifiziert wird.

4. Verfahren nach Anspruch 1 oder 2, wobei das Bestimmen, ob das Objekt in die Zielanwendung eingefügt werden soll oder nicht, Folgendes umfasst:
Bitten des Benutzers zu entscheiden, ob das Objekt in die Zielanwendung eingefügt werden soll oder nicht;
Einfügen des Objekts in die Zielanwendung, wenn der Benutzer entscheidet, das Objekt in die Zielanwendung einzufügen;
Unterbinden des Einfügens des Objekts in die Zielanwendung, wenn der Benutzer entscheidet, das Objekt nicht in die Zielanwendung einzufügen.

5. Verfahren nach Anspruch 4, das Folgendes umfasst:
Bereitstellen der Herkunftsinformationen für den Benutzer der Zielanwendung, bevor oder wenn der Benutzer gefragt wird, ob der Benutzer das Objekt in die Zielanwendung einfügen will oder nicht.

6. Verfahren nach Anspruch 1 oder 5, wobei die Herkunftsinformationen mindestens eines von einer Identifikation der ersten Anwendung, die den signierten Objektdatenblock in die Zwischenablage kopiert hat, einem Zeitstempel, zu dem das Objekt von der ersten Anwendung in die Zwischenablage kopiert wurde, einer Identifikation eines Benutzers, der das Objekt erzeugt hat, beinhaltet.

7. Verfahren nach einem der Ansprüche 1 bis 6, wobei das Objekt nacheinander von der ersten Anwendung zur Zwischenablage, von der Zwischenablage zu einer zweiten Anwendung und von der zweiten Anwendung zur Zwischenablage kopiert wurde,
wobei der signierte Objektdatenblock einen zweiten Herkunftsdatenblock umfasst, der zweite Herkunftsinformationen beinhaltet, die mit der zweiten Anwendung verknüpft sind, wobei die zweiten Herkunftsinformationen eine Identifikation der zweiten Anwendung beinhalten;
wobei der signierte Objektdatenblock eine zweite Signatur eines zweiten Nutzdatenblocks durch die zweite Anwendung umfasst, wobei der zweite Nutzdatenblock den Nutzdatenblock, die Signatur des Nutzdatenblocks durch die erste Anwendung und den zweiten Herkunftsdatenblock beinhaltet;
wobei das Verfahren Folgendes umfasst: Durchführen einer zweiten Verifizierung der Authentizität der zweiten Signatur und der Integrität des zweiten Nutzdatenblocks unter Verwendung der zweiten Signatur;
wobei das Bestimmen, ob das Objekt in die Zielanwendung eingefügt werden soll oder nicht, auf Basis der Ergebnisse der zweiten Verifizierung durchgeführt wird.

8. Verfahren nach einem der Ansprüche 1 bis 7, das Folgendes umfasst
Empfangen einer zweiten Benutzeranforderung zum Einfügen eines zweiten Objekts aus der Zwischenablage in die Zielanwendung;
Extrahieren eines zweiten Objektdatenblocks, der mit dem zweiten Objekt verknüpft ist, aus der Zwischenablage, wobei der zweite Objektdatenblock einen zweiten Nutzdatenblock und eine zweite Objektformatkennung umfasst, wobei der zweite Nutzdatenblock eine Repräsentation des zweiten Objekts umfasst, wobei die zweite Objektformatkennung ein Format der Repräsentation des zweiten Objekts anzeigt, wobei die zweite Objektformatkennung das Fehlen einer Signatur anzeigt, die die Quellanwendung authentifiziert;
Durchführen von einem vom Unterbinden des Einfügens des zweiten Objekts in die Zielanwendung und vom Einfügen des zweiten Objekts in die Zielanwendung, erst nachdem der Benutzer das Einfügen des Objekts in die Zielanwendung autorisiert hat.

9. Verfahren, das Folgendes umfasst:
Empfangen einer Benutzeranforderung zum Kopieren eines Objekts aus einer Quellanwendung in eine Zwischenablage;
Erzeugen eines Nutzdatenblocks für das Objekt, wobei der Nutzdatenblock eine Repräsentation des Objekts umfasst;
Erzeugen einer Signatur des Nutzdatenblocks, wobei die Signatur die Quellanwendung authentifiziert;
Kopieren eines signierten Objektdatenblocks in die Zwischenablage, wobei der signierte Objektdatenblock den Nutzdatenblock, die Signatur und eine Objektformatkennung umfasst, wobei die Objektformatkennung ein Format der Repräsentation des Objekts und das Vorhandensein einer Signatur im signierten Objektdatenblock anzeigt;
Erzeugen eines Herkunftsdatenblocks, der Herkunftsinformationen beinhaltet, die mit der Quellanwendung verknüpft sind, wobei der Nutzdatenblock den Herkunftsdatenblock umfasst

10. Verfahren nach Anspruch 9, wobei die Herkunftsinformationen mindestens eines von: einer Identifikation der ersten Anwendung, die den signierten Objektdatenblock in die Zwischenablage kopiert hat, einem Zeitstempel, zu dem das Objekt von der Quellanwendung in die Zwischenablage kopiert wurde, und einer Identifikation eines Benutzers, der das Objekt erzeugt hat, beinhaltet.

11. Einrichtung, die Mittel zum Durchführen eines Verfahrens umfasst, das Folgendes umfasst:
Empfangen einer Benutzeranforderung zum Einfügen eines Objekts aus einer Zwischenablage in eine Zielanwendung;
Extrahieren eines signierten Objektdatenblocks, der mit dem Objekt verknüpft ist, aus der Zwischenablage, wobei der signierte Objektdatenblock einen Nutzdatenblock und eine Objektformatkennung umfasst, wobei der Nutzdatenblock eine Repräsentation des Objekts umfasst, wobei die Objektformatkennung ein Format der Repräsentation und das Vorhandensein einer Signatur im signierten Objektdatenblock anzeigt, wobei die Signatur eine Signatur des Nutzdatenblocks durch eine Quellanwendung ist, die das Objekt zur Zwischenablage kopiert hat
Durchführen einer Verifizierung der Signatur;
Bestimmen auf Basis der Ergebnisse der Verifizierung, ob das Objekt in die Zielanwendung eingefügt werden soll oder nicht,
wobei der Nutzdatenblock einen Herkunftsdatenblock umfasst, der Herkunftsinformationen beinhaltet, die mit dem Objekt verknüpft sind.

12. Einrichtung, die Mittel zum Durchführen eines Verfahrens umfasst, das Folgendes umfasst:
Empfangen einer Benutzeranforderung zum Kopieren eines Objekts aus einer Quellanwendung in eine Zwischenablage;
Erzeugen eines Nutzdatenblocks für das Objekt, wobei der Nutzdatenblock eine Repräsentation des Objekts umfasst;
Erzeugen einer Signatur des Nutzdatenblocks, wobei die Signatur die Quellanwendung authentifiziert;
Kopieren eines signierten Objektdatenblocks in die Zwischenablage, wobei der signierte Objektdatenblock den Nutzdatenblock, die Signatur und eine Objektformatkennung umfasst, wobei die Objektformatkennung ein Format der Repräsentation des Objekts und das Vorhandensein einer Signatur im signierten Objektdatenblock anzeigt;
Erzeugen eines Herkunftssatenblocks, der Herkunftsinformationen beinhaltet, die mit der Quellanwendung verknüpft sind, wobei der Nutzdatenblock den Herkunftsdatenblock umfasst.

13. Einrichtung nach Anspruch 11 oder 12, wobei die Mittel Folgendes umfassen
- mindestens einen Prozessor;
- mindestens einen Speicher, in dem Anweisungen gespeichert sind, die, wenn sie von dem mindestens einen Prozessor ausgeführt werden, die Einrichtung veranlassen, das Verfahren durchzuführen.

## Revendications

1. Procédé comprenant les étapes suivantes :
recevoir une demande d'utilisateur de coller un objet depuis un presse-papiers dans une application cible ;
extraire du presse-papiers un bloc de données d'objet signé associé à l'objet, le bloc de données d'objet signé comprenant un bloc de données de charge utile et un identifiant de format d'objet, le bloc de données de charge utile comprenant une représentation de l'objet, l'identifiant de format d'objet indiquant un format de la représentation et la présence d'une signature dans le bloc de données d'objet signé, dans lequel la signature est une signature du bloc de données de charge utile par une application source ayant copié l'objet dans le presse-papiers ;
effectuer une vérification de la signature ;
déterminer s'il faut coller ou non l'objet dans l'application cible sur la base des résultats de la vérification ;
dans lequel le bloc de données de charge utile comprend un bloc de données de provenance comportant des informations de provenance associées à l'objet.

2. Procédé selon la revendication 1, comprenant l'étape suivante :
présenter un message d'avertissement sur l'interface utilisateur d'un appareil contenant le presse-papiers lorsque la signature n'est pas vérifiée avec succès.

3. Procédé selon la revendication 1 ou 2, dans lequel le fait de déterminer s'il faut coller ou non l'objet dans l'application cible comprend ce qui suit :
coller l'objet dans l'application cible lorsque la signature est vérifiée avec succès ;
empêcher le collage de l'objet dans l'application cible lorsque la signature n'est pas vérifiée avec succès.

4. Procédé selon la revendication 1 ou 2, dans lequel le fait de déterminer s'il faut coller ou non l'objet dans l'application cible comprend ce qui suit :
demander à l'utilisateur de décider s'il faut coller ou non l'objet dans l'application cible ;
coller l'objet dans l'application cible lorsque l'utilisateur décide de coller l'objet dans l'application cible,
empêcher le collage de l'objet dans l'application cible lorsque l'utilisateur décide de ne pas coller l'objet dans l'application cible.

5. Procédé selon la revendication 4, comprenant les étapes suivantes :
fournir à l'utilisateur de l'application cible les informations de provenance avant ou au moment de demander à l'utilisateur s'il souhaite ou non coller l'objet dans l'application cible.

6. Procédé selon la revendication 1 ou 5, dans lequel les informations de provenance comportent au moins un parmi une identification de la première application ayant copié le bloc de données d'objet signé dans le presse-papiers, un horodatage auquel l'objet a été copié dans le presse-papiers par la première application, une identification d'un utilisateur ayant généré l'objet.

7. Procédé selon l'une des revendications 1 à 6, dans lequel l'objet a été copié successivement depuis la première application dans le presse-papiers, depuis le presse-papiers dans une deuxième application et depuis la deuxième application dans le presse-papiers,
dans lequel le bloc de données d'objet signé comprend un deuxième bloc de données de provenance comportant des deuxièmes informations de provenance associées à la deuxième application, les deuxièmes informations de provenance comportant une identification d'une deuxième application ;
dans lequel le bloc de données d'objet signé comprend une deuxième signature d'un deuxième bloc de données de charge utile par la deuxième application, dans lequel le deuxième bloc de données de charge utile comporte le bloc de données de charge utile, la signature du bloc de données de charge utile par la première application et le deuxième bloc de données de provenance ;
dans lequel le procédé comprend : le fait d'effectuer une deuxième vérification de l'authenticité de la deuxième signature et de l'intégrité du deuxième bloc de données de charge utile en utilisant la deuxième signature ;
dans lequel le fait de déterminer s'il faut coller ou non l'objet dans l'application cible se fait sur la base des résultats de la deuxième vérification.

8. Procédé selon l'une des revendications 1 à 7, comprenant les étapes suivantes
recevoir une deuxième demande d'utilisateur de coller un deuxième objet depuis le presse-papiers dans l'application cible ;
extraire du presse-papiers un deuxième bloc de données d'objet associé au deuxième objet, le deuxième bloc de données d'objet comprenant un deuxième bloc de données de charge utile et un deuxième identifiant de format d'objet, le deuxième bloc de données de charge utile comprenant une représentation du deuxième objet, le deuxième identifiant de format d'objet indiquant un format de la représentation du deuxième objet, le deuxième identifiant de format d'objet indiquant l'absence d'une signature authentifiant une application source ;
effectuer une opération parmi empêcher le collage du deuxième objet dans l'application cible et coller le deuxième objet dans l'application cible seulement une fois que l'utilisateur a autorisé le collage de l'objet dans l'application cible.

9. Procédé comprenant les étapes suivantes :
recevoir une demande d'utilisateur de copier un objet depuis une application source dans un presse-papiers ;
générer un bloc de données de charge utile pour l'objet, le bloc de données de charge utile comprenant une représentation de l'objet ;
générer une signature du bloc de données de charge utile, dans lequel la signature authentifie l'application source ;
copier un bloc de données d'objet signé dans le presse-papiers, le bloc de données d'objet signé comprenant le bloc de données de charge utile, la signature et un identifiant de format d'objet, l'identifiant de format d'objet indiquant un format de la représentation de l'objet et la présence d'une signature dans le bloc de données d'objet signé ;
générer un bloc de données de provenance comportant des informations de provenance associées à l'application source, dans lequel le bloc de données de charge utile comprend le bloc de données de provenance

10. Procédé selon la revendication 9, dans lequel les informations de provenance comportent au moins un parmi : une identification de la première application ayant copié le bloc de données d'objet signé dans le presse-papiers, un horodatage auquel l'objet a été copié dans le presse-papiers par l'application source et une identification d'un utilisateur ayant généré l'objet.

11. Appareil comprenant des moyens pour mettre en œuvre un procédé comprenant les étapes suivantes :
recevoir une demande d'utilisateur de coller un objet depuis un presse-papiers dans une application cible ;
extraire du presse-papiers un bloc de données d'objet signé associé à l'objet,
le bloc de données d'objet signé comprenant un bloc de données de charge utile et un identifiant de format d'objet, le bloc de données de charge utile comprenant une représentation de l'objet, l'identifiant de format d'objet indiquant un format de la représentation et la présence d'une signature dans le bloc de données d'objet signé, dans lequel la signature est une signature du bloc de données de charge utile par une application source ayant copié l'objet dans le presse-papiers effectuer une vérification de la signature ;
déterminer s'il faut coller ou non l'objet dans l'application cible sur la base des résultats de la vérification,
dans lequel le bloc de données de charge utile comprend un bloc de données de provenance comportant des informations de provenance associées à l'objet.

12. Appareil comprenant des moyens pour mettre en œuvre un procédé comprenant les étapes suivantes :
recevoir une demande d'utilisateur de copier un objet depuis une application source dans un presse-papiers ;
générer un bloc de données de charge utile pour l'objet, le bloc de données de charge utile comprenant une représentation de l'objet ;
générer une signature du bloc de données de charge utile, dans lequel la signature authentifie l'application source ;
copier un bloc de données d'objet signé dans le presse-papiers, le bloc de données d'objet signé comprenant le bloc de données de charge utile, la signature et un identifiant de format d'objet, l'identifiant de format d'objet indiquant un format de la représentation l'objet et de la présence d'une signature dans le bloc de données d'objet signé ;
générer un bloc de données de provenance comportant des informations de provenance associées à l'application source, dans lequel le bloc de données de charge utile comprend le bloc de données de provenance.

13. Appareil selon la revendication 11 ou 12, dans lequel les moyens comprennent
- au moins un processeur ;
- au moins une mémoire stockant des instructions qui, lorsqu'elles sont exécutées par l'au moins un processeur, amènent l'appareil à mettre en œuvre le procédé.
